# EUROPEAN PATENT APPLICATION

(11) **EP 4 671 830 A1**
(43) Date of publication of application: **31.12.2025**
(21) Application number: 24193897.6
(22) Date of filing: 09.08.2024
(51) Int. Cl.: G01T 1/17, G01T 1/20, G01T 1/208

(54) **SYSTEM FOR READING OUT AND ACQUIRING DATA FROM MULTI-ELEMENT SCALED SPATIAL ARRAYS OF SCINTILLATION DETECTORS AND SYSTEM FOR DETECTING AND ANALYSING IONIZING RADIATION COMPRISING SUCH SYSTEM**

(30) Priority: 25.06.2024 PL 44896824
(71) Applicant: Akademia Gorniczo-Hutnicza im. Stanislawa Staszica w Krakowie, 30-059 Krakow (PL)
(72) Inventor: Fiutowski, Tomasz, 30-699 Kraków (PL); Kopec, Maciej, 32-087 Zielonki (PL); Koperny, Stefan, 30-433 Kraków (PL); Mindur, Bartosz, 31-209 Kraków (PL); Moron , Jakub, 31-302 Kraków (PL); Szumlak, Tomasz, 31-413 Kraków (PL); Wiacek, Piotr, 31-344 Kraków (PL)
(74) Representative: Rybarczyk, Dariusz Pawel

(57) **Abstract**

The present invention relates to a system for reading out and acquiring data from multielement scaled spatial arrays of scintillation detectors, characterised in that it comprises printed circuit boards, PCB: a base board (101) comprising an FPGA programmable logic module (123) connected to it by means of a connector (111) and a communication interface (110) for providing communication with an external management unit; a Front End Board (103) connected to the base board (101) by means of a dedicated connector (112), wherein on the Front End Board (103) a connector (113) is arranged for connecting a matrix multi-anode photomultiplier (122) and a dedicated specialized readout circuit (120) for reading out the matrix multi-anode photomultiplier (122); and a high-voltage power supply board, HV board, (102) connected to the Front End Board (103) by means of two connector pairs (114, 115) separating the signal domain and the power supply domain, wherein the HV Board (102) has power circuits (121, 126) attached to it, and is provided to power the Front End Board (103). The FPGA programmable logic module (123) is programmed for configuring the dedicated specialized readout circuit (120), as well as for processing and sending the measurement data provided by it through the communication interface (110).

The present invention furthermore relates to a system for detecting and analysing ionizing radiation comprising such system for reading out and acquiring data from multielement scaled spatial arrays of scintillation detectors.

## Description

The subject of the invention is a system for reading out and acquiring data from multi-element scalable spatial arrays of scintillation detectors. Such a system may be used to build multi-channel detection systems built on the basis of scintillation detectors with a number of channels from several dozen to several thousand, providing the ability to process data in real time and produce sets of reduced data intended for further physical analysis. The subject of the invention is also a system for detecting and analysing ionizing radiation comprising the above-mentioned system.

Scintillation detectors are designed to detect ionizing radiation based on the scintillation phenomenon, which consists in the creation of a light pulse as a result of ionizing radiation passing through selected substances (scintillators). As part of the scintillation phenomenon, part of the energy of ionizing radiation is absorbed by the aforementioned substances and then, as a result of luminescence, is emitted in the form of electromagnetic radiation with a longer wavelength, typically in the ultraviolet or visible light range. The photons emitted in this way reach a photomultiplier, at the output of which electric pulses appear proportional to the scintillator light pulses. As a result of recording electrical pulses, it is possible to determine the occurrence of ionizing radiation and its intensity. Ionizing radiation that can be detected and measured by means of scintillation detectors is, for example, X-ray radiation, gamma radiation, cosmic radiation, or neutron radiation.

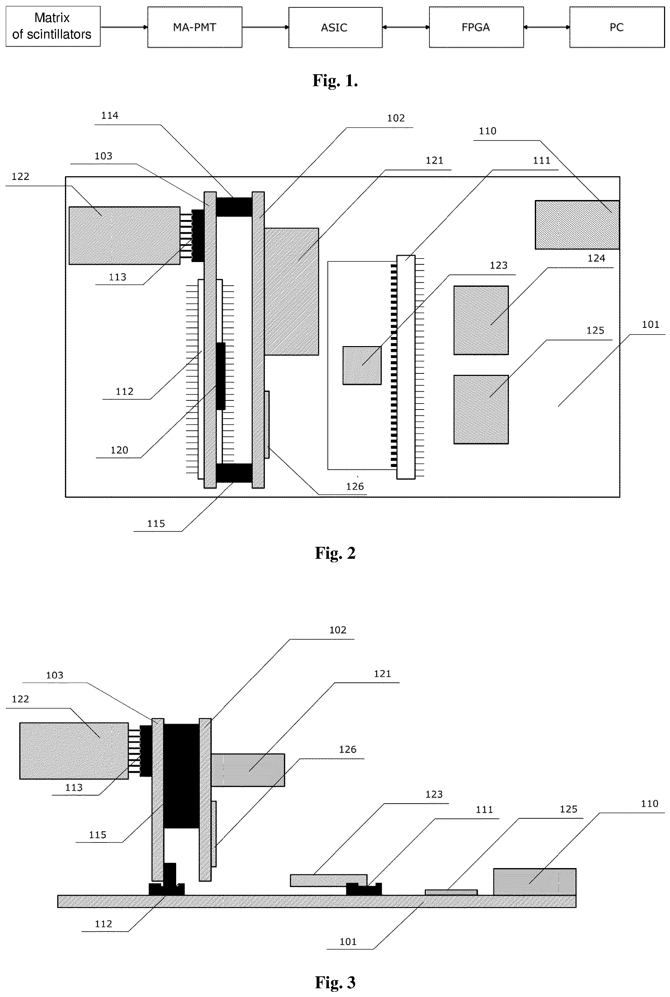

In the case of simultaneous use of a larger number of scintillation detectors, for example organized in multi-element matrices, it is necessary to simultaneously read out and acquire a large amount of data from many elements of the matrix. This requires providing an appropriate hardware (physical) solution. A block diagram of a possible system solution is shown in Fig. 1. Such a system consists of a scintillator matrix coupled with a matrix multi-anode photomultiplier (MA-PMT), a dedicated specialized readout circuit (also referred to as an ASIC, application-specific integrated circuit) for reading out electrical signals, an FPGA (field-programmable gate array) programmable logic module connected to the dedicated specialized readout circuit, and an external management unit in the form of a personal computer (PC) communicating with the FPGA programmable logic module. The use of the MA-PMT, which is a combination of many miniature photomultipliers in one housing, allows for a significant reduction in the size of the entire system. The electrical output signals supplied at the MA-PMT output are read by the aforementioned dedicated specialized integrated circuit. The FPGA programmable logic module controls the operation of the ASIC and acts as an intermediary in the data transfer process between the ASIC and the external management unit in the form of a PC, where the data can be subjected to further processing and analysis. In this application, the system shown in Fig. 1 is also referred to as a system or assembly for detecting and analysing ionizing radiation.

The system design used in the JUNO experiment top tracker is known (The JUNO experiment Top Tracker, Nuclear Instruments and Methods in Physics Research Section A: Accelerators, Spectrometers, Detectors and Associated Equipment, vol. 1057, December 2023, 168680). This system is designed on the basis of three printed circuit boards (PCB): a Front End Board (FEB), a Readout Board (ROB) and a Concentrator Board (CB). The FEB and the ROB are connected to each other directly by means of a dedicated connector, whereas the CB is connected to the ROB by means of cables. Up to 16 ROBs can be connected to one CB. This solution ensures scalability and allows the entire system to be expanded to the desired size by multiplying the CBs with attached ROBs together with the FEBs. Each FEB has a connector for connecting a matrix multi-anode photomultiplier (MA-PMT), an application-specific integrated circuit (ASIC), which extracts information about the detection of radiation in a scintillation detector coupled to the selected anode (channel) of the MA-PMT, and an FPGA system that serializes data from the ASIC and sends it to the ROB. The ROB is equipped with another FPGA circuit, responsible for the configuration of the ASIC and processing the data coming from it, which is then sent to the CB in an appropriately compressed form. The ROB also has a number of circuits providing appropriate supply voltages to all components placed on the FEB, including a system providing high voltage (HV) necessary for the correct operation of the MA-PMT. All voltages, except HV voltage, are supplied via a dedicated connector connecting the FEB and the ROB. HV voltage is supplied to the MA-PMT via a cable connection.

The object of the invention is to develop a system for reading out and acquiring data from multi-element scaled spatial arrays of scintillation detectors, with the most compact design possible, which will offer, depending on the needs, from several dozen to even several thousand reading channels, simultaneously allowing for easy maintenance and the possibility of replacing damaged elements thanks to the modular design. Another object of the invention is to provide a system for detecting and analysing ionizing radiation comprising the above-mentioned system.

The above-mentioned object is achieved by a system for reading out and acquiring data from multi-element scaled spatial arrays of scintillation detectors, characterised in that it comprises printed circuit boards, PCB: a base board comprising an FPGA programmable logic module connected to it by means of a connector, and a communication interface for providing communication with an external management unit; a Front End Board connected to the base board by means of a dedicated connector, wherein on the Front End Board a connector is arranged for connecting a matrix multi-anode photomultiplier and a dedicated specialized readout circuit for reading out the matrix multi-anode photomultiplier; and a high-voltage power supply board, HV board, connected to the Front End Board by means of two connector pairs separating the signal domain and the power supply domain, wherein the HV Board has power circuits attached to it, and is provided to power the Front End Board. The FPGA programmable logic module is programmed for configuring the dedicated specialized readout circuit, as well as for processing and sending the measurement data provided by it through the communication interface.

In one preferred embodiment of the invention, systems for monitoring environmental conditions, in particular temperature and humidity, and/or operating parameters, in particular supply voltage and current consumption, of the FPGA programmable logic module are provided on the base board.

In another preferred embodiment of the invention, systems for monitoring environmental conditions, in particular temperature and humidity, and/or operating parameters, in particular supply voltage and current consumption, of the dedicated specialized readout circuit and/or the matrix multi-anode photomultiplier are provided on the HV Board.

In still another preferred embodiment of the invention, a diagnostics and calibration interface for fast testing the dedicated specialized readout circuit is furthermore provided on the Front End Board.

In still another preferred embodiment of the invention, supply voltage generating circuits for the FPGA programmable logic module are provided on the base board.

In still another preferred embodiment of the invention, the power circuits attached to the HV Board include a high voltage power supply module for the matrix multi-anode photomultiplier and supply voltage generating circuits for the dedicated specialized readout circuit.

In still another preferred embodiment of the invention, the communication interface is an RJ-45 Ethernet connector.

In still another preferred embodiment of the invention, the dedicated specialized readout circuit is a 64-channel ASIC integrated circuit for extracting information about radiation detection in a scintillation detector.

In still another preferred embodiment of the invention, the base board has a 3U size consistent with the standard used in the construction of network devices.

The present invention includes also a system for detecting and analysing ionizing radiation, which comprises at least one system for reading out and acquiring data from multi-element scaled spatial arrays of scintillation detectors as defined above; at least one scintillator matrix assembly coupled with the matrix multi-anode photomultiplier, wherein an output the matrix multi-anode photomultiplier is connected to the dedicated connector of said system for reading out and acquiring data; and an external management unit connected to the communication interface, for managing said at least one for managing said at least one system for reading out and acquiring data, for collecting data from it, and for analysing the data.

In a preferred embodiment of the system according to the present invention, the system comprises two or more sets comprising the system for reading out and acquiring data from multi-element scaled spatial arrays of scintillation detectors and the scintillator matrix assembly coupled with the matrix multi-anode photomultiplier, wherein the communication interfaces of the individual sets are connected to the external management unit via a network switch.

The system for reading out and acquiring data from multi-element scaled spatial arrays of scintillation detectors according to the invention is built on the basis of three PCBs with specifically defined and optimized functionality: the base board (also called BB for short), the Front End Board (FEB for short) and the HV Board (HVB).

The BB is a base to which the FEB and the FPGA programmable logic module are connected via dedicated connectors. In contrast to the previously mentioned prior art solution, in the described solution according to the invention only one FPGA programmable logic module is used, the role of which is both the configuration of the dedicated specialized readout circuit ASIC, as well as processing and sending the measurement data provided by it to the external management unit (PC). Bidirectional communication with the external management unit, via a network switch, is advantageously carried out using an RJ-45 Ethernet communication interface provided on the BB. This board also contains supply voltage generating circuits for the FPGA programmable logic module and circuits for real-time monitoring of the environmental conditions (temperature and humidity) and the operating status of the dedicated specialized readout circuit (ASIC). Thanks to the use of monitoring circuits, flexible configuration of the entire system is possible and its parameters can be adjusted to current operating conditions, as well as early detection of potential failures is possible.

On the FEB there is a connector for connecting the multi-anode photomultiplier (MA-PMT), the dedicated specialized readout circuit (ASIC), preferably a 64-channel circuit, which extracts information about the detection of radiation in the scintillation detector coupled to the selected anode (channel) of the MA-PMT, and connectors for connecting the FEB to the HVB. The FEB may advantageously comprise a diagnostics and calibration interface enabling quick testing of the dedicated specialized readout circuit.

The HVB is the board that powers the FEB. It has a power supply module that generates high voltages for the MA-PMT, and power supply modules that generate supply voltages necessary for the proper functioning of the dedicated specialized readout circuit. The use of dedicated connectors eliminates the disadvantageous connection of the high voltage power supply of the MA-PMT via cables.

Connecting the FPGA programmable logic circuit as a module, via a dedicated connector, instead of mounting it directly on the BB, significantly reduces the level of complexity and costs of manufacturing the BB itself, and allows for very easy replacement of the FPGA programmable logic module in the event of its failure or the need to reprogram. The use of communication with the external management unit in the Ethernet standard and designing the BB in a size consistent with the standard used in the construction of network devices allow for relatively easy scaling and expansion of the system from several dozen to several thousand reading channels.

The use of the Ethernet communication interface allows for almost any upward scaling of the detection system using an external network architecture. There is no upper limit for the maximum number of modules. Since the system uses a connector for the matrix multi-anode photomultiplier with a large number of channels, for example a 64-channel MA-PMT, scaling of the system using a large number of the chosen 64-channel MA-PMT is carried out with a granulation of 64 channels by adding another system according to the invention comprising an identical set of the BB with the FEB connected to the HVB. The BB is advantageously sized according to standards, for example 3U, thanks to which the expansion of the system can be carried out using standard crates and rack cabinets used in the construction of network systems and solutions. A person skilled in the art will notice that, depending on the needs and design requirements, a matrix multi-anode photomultiplier with a larger or smaller number of channels and/or a different size of the BB can be used.

The proposed system according to the invention is fully modular, which significantly improves its maintenance and servicing, as all critical elements can be easily replaced if a defect is detected.

The system according to the invention provides a number of advantages, which include:
- the system is fully modular;
- all critical elements can be easily replaced if a defect is detected;
- the system is equipped with only one FPGA programmable logic module, wherein the FPGA programmable logic module advantageously configures the dedicated specialized readout circuit, processes and transmits data from the dedicated specialized readout circuit to the external management unit, what simplifies the structure of the system and reduces the costs required for its production and maintenance;
- the connections between the BB, the FEB and the HVB are implemented in the form of connectors, and the BB is equipped with a communication interface, preferably in the Ethernet standard;
- the communication interface such as the Ethernet standard connector allows scaling the detection system comprising many systems according to the invention upwards using an external network architecture, there is no limit for the maximum number of modules;
- the ability to design the BB in a size consistent with common standards, for example in 3U size;
- the system can be expanded based on network solutions using standard grids and cabinets used in the construction of network devices;
- the use of monitoring circuits allows the system operation to be adjusted to current conditions.

The subject of the invention is shown in an embodiment in a schematic drawing, in which:
Fig. 1 shows a general block diagram illustrating components of a system for detecting and analysing ionizing radiation,
Fig. 2 shows a diagram of a system according to the invention in a top view,
Fig. 3 shows a diagram of the system according to the invention in a side view.

The block diagram shown in Fig. 1, which has already been explained in the introduction, comprises a number of components that enable the detection and analysis of ionizing radiation. The first two blocks in the form of a matrix of scintillators and a matrix multi-anode photomultiplier (MA-PMT), respectively, are responsible for detecting ionizing radiation and delivering electrical pulses proportional to its intensity. The signals generated in this way require reading and data acquisition, and this task is performed by the system according to the invention, which uses for this purpose, among others, a dedicated specialized readout circuit (ASIC) and an FPGA programmable logic module before the appropriately processed data is sent to an external management unit, e.g. in the form of a personal computer PC, where it can be subjected to further analysis. Although not shown in Fig. 1, the external management unit may support a larger number of sets, each comprising a matrix of scintillators, a matrix multi-anode photomultiplier, MA-PMT, and a system according to the invention comprising the dedicated specialized readout circuit and the FPGA programmable logic module. Multiple such assemblies may be connected to the external management unit by means of a network switch to enable the collection of data from an entire block or cluster of MA-PMT photomultipliers.

Fig. 2 and Fig. 3 show an embodiment of the system according to the invention in a top view and a side view, respectively. The system is intended to be connected to an output of the matrix multi-anode photomultiplier, MA-PMT, 122 on one side, and to the management unit on the other side, in order to enable reading and acquisition of data concerning detected ionizing radiation, and further analysis of the data. For this purpose, as shown in Fig. 2 and Fig. 3, the system for reading out and acquiring data from multi-element scaled spatial arrays of scintillation detectors according to the present invention comprises a base board 101, also referred to in short as BB, to which a Front End Board 103, also referred to in short as FEB, is connected, with a dedicated specialized readout circuit 120 arranged thereon, and a FPGA module 123 with a programmable logic circuit. A connector 112 (one male and one female) preferably designed as Razor Beam^{™} High-Speed Hermaphroditic LSEM is provided for connecting the boards 101 and 103, while the FPGA programmable logic module 123 is connected via a connector 111 preferably designed as a SO-DIMM connector. The role of the FPGA module 123 with the programmable logic circuit is to configure the dedicated specialized readout circuit 120 and to process and send the measurement data provided by it to the external management unit. Bidirectional communication between the board 101 and the components located thereon and the external PC management unit takes place via a connector 110, which is an RJ-45 Ethernet connector in the presented embodiment and preferably via an external network switch. The use of an external network switch advantageously allows for the connection of many systems according to the invention to one external management unit using known network solutions.

On the board 103 there is a connector 113, preferably made as Razor Beam^{™} High-Speed Hermaphroditic LSEM, for connecting the matrix multi-anode photomultiplier 122, the previously mentioned dedicated specialized readout circuit 120 that extracts information on the detection of radiation in a scintillation detector coupled to a selected anode (channel) of the matrix multi-anode photomultiplier, MA-PMT, a diagnostics and calibration interface enabling fast testing of the dedicated specialized readout circuit 120 (not shown in Figures 2 and 3), and male parts of a pair of connectors 114 and 115 for connecting the board 103 to the HV board 102, also referred to in short as HVB. The connectors 114 and 115 are preferably made as pinheader connectors. Testing and/or calibrating the dedicated specialized readout circuit 120 may be carried out by means of an external test device which is connected to said diagnostics and calibration connector, usually by means of a cable adapted for this purpose, and then a diagnostic procedure programmed in the external test device is started by directly reading a series of parameters of the dedicated specialized readout circuit 120 and checking whether they are correct or whether they are within the correct ranges, and if necessary, calibration or other appropriate action is carried out. This allows for quick and direct handling of the dedicated specialized readout circuit 120.

The base board 101 has furthermore arranged thereon circuits 124 generating power supply for the FPGA programmable logic module 123, as well as monitoring circuits 125 for monitoring in real time the environmental conditions by means of suitable sensors, such as e.g. sensors for measuring temperature and for monitoring the operating status of the FPGA programmable logic module 123, for example by measuring the supply voltages and the current drawn. The use of monitoring circuits 125 in this case allows, above all, for early detection of potential failures manifesting themselves, for example, by significantly higher or significantly lower than the default current draw or a high temperature indicating excessive heating of the FPGA module. In order to determine whether the operating conditions are correct, the correct range of temperature, supply voltage and current drawn can be determined with respect to the monitored FPGA module 123, for example by defining threshold values. When any threshold value is exceeded, an abnormality is detected and may be signalled in any known manner, e.g. by sending a warning to the external management unit, or one of the predefined remedial actions may be automatically triggered, e.g. by disconnecting the power supply to the FPGA module 123, resetting the FPGA module 123, etc.

There are female parts of a pair of connectors 114 and 115 arranged on the board 102, for connecting with corresponding parts of the pair of connectors 114, 115 present on the board 103. By providing the pair of connectors 114 and 115 between the individual boards 102, 103, no cable connections occur. The pairs of connectors 114 and 115 improve the mechanical stability of the system and, as a result of the domain division, ensure efficient signal transmission. In the context of the present invention, the term domain division should be understood as separating the signal domain and the power supply domain, whereby control signals and data from monitoring circuits are transmitted between the boards 102 and 103 via one pair of connectors, while the other pair of connectors supplies the supply voltage, thereby reducing signal interference, increasing operational reliability, and facilitating diagnostics and maintenance. The board 102 is a power supply board for the board 103. Arranged thereon are power supply circuits, including a high-voltage power supply module 121 for powering the matrix multi-anode photomultiplier 122 and power supply modules 126 generating the supply voltages necessary for the correct operation of the dedicated specialized readout circuit 120 performing the reading from the matrix multi-anode photomultiplier 122. The board 102 has also arranged thereon monitoring circuits (not shown in figures 2 and 3) similar to the monitoring circuits 125. In this case, the role of the monitoring circuits provided on the board 102 is primarily to ensure optimal operating conditions for the dedicated specialized readout circuit 120 and the matrix multi-anode photomultiplier 122. The measurement of temperature is particularly important, the changes in which cause changes in the operation of the dedicated specialized readout circuit 120 and the matrix multi-anode photomultiplier 122. Based on the measured temperature value it is possible, by means of the FPGA module 123, to change both the configuration the dedicated specialized readout circuit 120 and the gain of the matrix multi-anode photomultiplier 122 by changing the value of its voltage generated by the circuit 121 on the board 102. In this case, it is also possible to apply in an analogous manner the methods of monitoring and reacting to detected anomalies as described earlier in relation to the monitoring circuits 125.

The system according to the invention can be multiplied to provide for data readout from a larger number of matrix multi-anode photomultipliers coupled to their assigned scintillator matrices. As indicated earlier, known networking techniques can be used for this purpose, for example connecting the output of each of the multiple systems to a network switch in order to transfer data from the system thus created to the external management unit also connected to said network switch. Thanks to the advantages of the system according to the invention, use and maintenance of the system set are greatly facilitated.

It will be appreciated by the skilled person that the above-described embodiment is only one possible form of implementing the invention. The invention is not limited to the details of implementation shown, but is defined by the scope of the patent claims.

### List of references:

101 - Base board, BB
102 - HV Board, HVB
103 - Front End Board, FEB
110 - Communication interface (Ethernet, RJ-45 standard)
111 - Connector for connecting the FPGA module
112 - Pair of connectors (male and female) for connecting FEB 103 to BB 101
113 - Connector for connecting the matrix multi-anode photomultiplier
114 - Pair of connectors (male and female) for connecting the HVB 102 to the FEB 103
115 - Pair of connectors (male and female) for connecting the HVB 102 to the FEB 103
120 - Dedicated specialized readout circuit
121 - High voltage power supply module for the matrix multi-anode photomultiplier
122 - Matrix multi-anode photomultiplier, MA-PMT
123 - FPGA programmable logic module
124 - Supply voltage generating circuits for the FPGA module
125 - Monitoring circuits
126 - Supply voltage generating circuits for the dedicated specialized readout circuit 120

## Claims

1. A system for reading out and acquiring data from multi-element scaled spatial arrays of scintillation detectors, **characterised in that** it comprises printed circuit boards, PCB:
- a Base Board (101) comprising an FPGA programmable logic module (123) connected to it by means of a connector (111) and a communication interface (110) for providing communication with an external management unit;
- a Front End Board (103) connected to the base board (101) by means of a dedicated connector (112), wherein on the Front End Board (103) a connector (113) is arranged for connecting a matrix multi-anode photomultiplier (122) and a dedicated specialized readout circuit (120) for reading out the matrix multi-anode photomultiplier (122);
- a high-voltage power supply board, HV Board, (102) connected to the Front End Board (103) by means of two connector pairs (114, 115) separating the signal domain and the power supply domain, wherein the HV Board (102) has power circuits (121, 126) attached to it, and is provided to power the Front End Board (103),
wherein the FPGA programmable logic module (123) is programmed for configuring the dedicated specialized readout circuit (120), as well as for processing and sending the measurement data provided by it through the communication interface (110).

2. The system according to claim 1, **characterised in that** circuits (125) for monitoring environmental conditions, in particular temperature and humidity, and/or operating parameters, in particular supply voltage and current consumption, of the FPGA programmable logic module (123) are furthermore provided on the base board (101).

3. The system according to claim 1 or 2, **characterised in that** circuits for monitoring environmental conditions, in particular temperature and humidity, and/or operating parameters, in particular supply voltage and current consumption, of the dedicated specialized readout circuit (120) and/or of the matrix multi-anode photomultiplier (122) are furthermore provided on the HV Board (102).

4. The system according to any of claims 1 - 3, **characterised in that** a diagnostics and calibration interface for fast testing the dedicated specialized readout circuit (120) is furthermore provided on the Front End Board (103).

5. The system according to any of claims 1 - 4, **characterised in that** supply voltage generating circuits (124) for the FPGA programmable logic module (123) are provided on the base board (101).

6. The system according to claim 1, **characterised in that** the power circuits attached to the HV Board (102) include a high voltage power supply module (121) for the matrix multi-anode photomultiplier (122) and supply voltage generating circuits (126) for the dedicated specialized readout circuit (120).

7. The system according to claim 1, **characterised in that** the communication interface (110) is an RJ-45 Ethernet connector.

8. The system according to claim 1, **characterised in that** the dedicated specialized readout circuit (120) is a 64-channel ASIC integrated circuit for extracting information about radiation detection in a scintillation detector.

9. The system according to claim 1, **characterised in that** the base board (101) has a 3U size consistent with the standard used in the construction of network devices.

10. A system for detecting and analysing ionizing radiation, **characterised in that** it comprises:
- at least one system for reading out and acquiring data from multi-element scaled spatial arrays of scintillation detectors as defined in one of claims 1 - 9;
- at least one scintillator matrix assembly coupled with the matrix multi-anode photomultiplier (122), wherein an output the matrix multi-anode photomultiplier (122) is connected to the dedicated connector (113) of said system for reading out and acquiring data;
- an external management unit connected to the communication interface (110), for managing said at least one for managing said at least one system for reading out and acquiring data, for collecting data from it, and for analysing the data.

11. The system according to claim 10, **characterised in that** it comprises two or more sets comprising the system for reading out and acquiring data from multi-element scaled spatial arrays of scintillation detectors and the scintillator matrix assembly coupled with the matrix multi-anode photomultiplier, wherein the communication interfaces (110) of the individual sets are connected to the external management unit via a network switch.
